# EUROPÄISCHE PATENTANMELDUNG

(11) **EP 4 529 762 A1**
(43) Veröffentlichungstag der Anmeldung: **02.04.2025**
(21) Anmeldenummer: 24198741.1
(22) Anmeldetag: 05.09.2024
(51) Int. Cl.: A01K 31/02, A01K 31/00, A01K 31/22

(54) **AUFZUCHT-HALTUNGSEINRICHTUNG ZUR AUFZUCHT VON GEFLÜGELTIEREN, BETREFFENDER GEFLÜGELTIERSTALL UND VERWENDUNG**

(30) Priorität: 20.09.2023 LU 505136
(71) Anmelder: Big Dutchman International GmbH, 49377 Vechta (DE)
(72) Erfinder: Scheele, Henry, 49377 Langförden (DE)
(74) Vertreter: Eisenführ Speiser

(57) **Zusammenfassung**

Die Erfindung betrifft eine Aufzucht-Haltungseinrichtung (2) zur gestuften Aufzucht von Geflügeltieren, insbesondere Aufzucht-Voliere (2), mit wenigstens einer ersten Aufzuchtsebene (6) und einer zweiten Aufzuchtsebene (8), welche oberhalb der ersten Aufzuchtsebene (6) angeordnet ist, wobei die Aufzuchtsebenen (6, 8) zur Haltung der Geflügeltiere eingerichtet sind, und wobei die erste Aufzuchtsebene (6) zu wenigstens einer Seite (10) der Aufzucht-Haltungseinrichtung (2) eine erste seitliche Öffnung (11a) aufweist und die zweite Aufzuchtsebene (8) zu der Seite (10) eine zweite seitliche Öffnung (11b) aufweist, und einer Türanordnung (12) zum Verschließen der Öffnungen (11a, 11b).

Erfindungsgemäß wird vorgeschlagen, dass die Türanordnung (12) ein Verschlussmittel (13) aufweist, welches gegenüber den beiden Öffnungen (11a, 11b) vertikal verschiebbar angeordnet und dazu eingerichtet ist, die erste Öffnung (11a), die zweite Öffnung (11b) und beide Öffnungen freizugeben oder zu verschließen.

## Beschreibung

Die Erfindung betrifft eine Aufzucht-Haltungseinrichtung zur gestuften Aufzucht von Geflügeltieren, insbesondere eine Aufzucht-Voliere, mit wenigstens einer ersten Aufzuchtsebene und einer zweiten Aufzuchtsebene, welche oberhalb der ersten Aufzuchtsebene angeordnet ist, wobei die Aufzuchtsebenen zur Haltung der Geflügeltiere eingerichtet sind, und wobei die erste Aufzuchtsebene zu wenigstens einer Seite der Aufzucht-Haltungseinrichtung eine erste seitliche Öffnung aufweist und die zweite Aufzuchtsebene zu der Seite eine zweite seitliche Öffnung aufweist, und einer Türanordnung zum Verschließen der Öffnungen.

Derartige Aufzucht-Haltungsvorrichtungen sind aus dem Stand der Technik bekannt. Sie werden zur sogenannten gestuften Aufzucht von Geflügeltieren verwendet. Das bedeutet, dass die Geflügeltiere je nach Wachstumsstadium auf den einzelnen Aufzuchtsebenen gehalten werden oder aber durch die Öffnung von Verschlussmitteln seitliche Öffnungen der Aufzuchtsebenen freigegeben werden, sodass die Tiere die Haltungseinrichtung verlassen und zwischen den einzelnen Aufzuchtsebenen oder auch hin zu einem Boden unterhalb der Haltungseinrichtung wechseln können. Zum Verschluss der seitlichen Öffnungen der Aufzuchtsebenen ist bekannt, als Verschlussmittel Klappgitter, Faltgitter, oder Schiebegitter zu verwenden, die separat für die einzelnen Aufzuchtsebenen vorgesehen sind und dazu eingerichtet sind, die betreffenden seitlichen Öffnungen zu verschließen.

Auch wenn sich diese Lösungen grundsätzlich bewährt haben, besteht dennoch Raum für Verbesserungen. So sind zur Öffnung und Freigabe der seitlichen Öffnungen für jede Aufzuchtsebene typischerweise separate Verschlussmittel vorgesehen, die die mechanische Komplexität der Haltungseinrichtung erhöhen. Darüber hinaus sind vom Bediener häufig eine Vielzahl von Verschlussmitteln zu öffnen oder zu verschließen, was mit einem durchaus signifikanten Bedienungsaufwand einhergeht. Im Übrigen besteht die Herausforderung, entnommene Verschlussmittel bei Nichtbenutzung zu verstauen. Bei Haltungseinrichtungen, die verschiebbare Verschlussmittel aufweisen, versperren diese häufig zumindest teilweise einen Zugang zu den Geflügeltieren.

Vor diesem Hintergrund lag der Erfindung die Aufgabe zu Grunde, eine Aufzucht-Haltungseinrichtung der eingangs bezeichneten Art dahingehend weiterzubilden, dass die im Stand der Technik aufgefundenen Nachteile möglichst weitgehend behoben werden. Insbesondere war einer Aufzucht-Haltungseinrichtung anzugeben, die über eine Türanordnung verfügt, die flexibel konfigurierbar ist und einen hohen Bedienkomfort aufweist, sowie eine Zugänglichkeit der Geflügeltiere möglichst nicht oder nur geringfügig beeinträchtigt.

Erfindungsgemäß wird die Aufgabe bei einer Aufzucht-Haltungseinrichtung der eingangs genannten Art dadurch gelöst, die Türanordnung ein Verschlussmittel aufweist, welches gegenüber den beiden Öffnungen vertikal verschiebbar angeordnet und dazu eingerichtet ist, die erste Öffnung, die zweite Öffnung und beide Öffnungen freizugeben oder zu verschließen. Die erste Öffnung ist dabei gewissermaßen eine untere Öffnung und die zweite Öffnung eine obere Öffnung der Aufzucht-Haltungseinrichtung.

Die Erfindung macht sich die Erkenntnis zu Nutze, dass mittels der Verwendung eines einzigen vertikal verschiebbaren Verschlussmittels nach Art einer Tür bzw. eines Tores die seitlichen Öffnungen beider Aufzuchtsebenen flexibel geöffnet und geschlossen werden können. Beispielsweise ermöglicht eine Positionierung des Verschlussmittels dergestalt, dass beide Öffnungen freigegeben sind, dass impfendes Personal die Tiere beim Fangen und Impfen leichter aus der Anlage entnehmen kann. Da das Verschlussmittel vollständig aus dem Bereich der beiden Öffnungen zu den Aufzuchtsebenen entfernt ist, entstehen für das Personal keine Barrieren und das Personal kann sich bei Bedarf teilweise oder vollständig in die Haltungseinrichtung hineinstellen. In einem Betriebsszenario, in dem lediglich die zweite, obere Öffnung durch das Verschlussmittel verschlossen ist, wird sichergestellt, dass die jungen Tiere nicht von der oberen Aufzuchtsebene hinunter auf einen Boden unterhalb der Haltungseinrichtung springen können und sich hierbei möglicherweise verletzten. Zum anderen wird es für das Personal erleichtert, Geflügeltiere zunächst aus der unteren Aufzuchtsebene zu entnehmen, wobei die Tiere sicher in der oberen Aufzuchtsebene gehalten werden. Wird das Verschlussmittel derart positioniert, dass beide Öffnungen geschlossen sind, kann sichergestellt werden, dass die Geflügeltiere, insbesondere in der Anfangsphase des Aufzuchtsvorgangs, nicht auf den Boden unterhalb der Haltungseinrichtung gelangen können. Insoweit kann mittels eines einzigen Verschlussmittels besonders flexibel auf die zu stellenden Anforderungen an eine gestufte Aufzucht für das Bedienpersonal eingegangen werden. Im Vergleich zu aus dem Stand der Technik bekannten Lösungen, bei denen Klappgitter oder Faltgitter eingesetzt werden, wird die Zugänglichkeit der Haltungseinrichtung insgesamt deutlich erhöht. Dies insbesondere deshalb, da das Verschlussmittel vorzugsweise vollständig aus dem Bereich der seitlichen Öffnungen verschoben werden kann.

Gemäß einer Ausführungsform weist die Türanordnung eine Führungsanordnung zur Führung des Verschlussmittels auf, wobei die Führungsanordnung an einem Grundgestell der Haltungseinrichtung angeordnet ist. Mittels der Führungsanordnung wird auf sichere Weise sichergestellt, dass das Verschlussmittel relativ zu den Öffnungen verschoben werden kann. Durch die Anordnung an dem Grundgestell wird darüber hinaus eine besonders platzsparende Bauform der Führungsanordnung erreicht.

Gemäß einer Ausführungsform weist die Führungsanordnung gegenüberliegend angeordnete Führungsschienen auf, an welchen das Verschlussmittel verschiebbar geführt ist, und wobei die Führungsschienen benachbart zu den seitlichen Öffnungen einen im Wesentlichen vertikalen Führungsschienenabschnitt aufweisen, welcher dazu eingerichtet ist, das Verschlussmittel zum Verschließen und Freigeben der seitlichen Öffnung zu führen. Die Führung des Verschlussmittels mittels Führungsschienen ermöglicht eine sichere Führung des Führungsmittels, wobei das Führungsmittel durch den Bediener auf einfache Weise verschiebbar ist und wobei sichergestellt wird, dass die Geflügeltiere bei geschlossenen seitlichen Öffnungen in der jeweiligen Aufzuchtsebene gehalten werden.

Gemäß einer Ausführungsform weisen die Führungsschienen oberseitig an dem Grundgestell einen im Wesentlichen horizontalen Führungsschienenabschnitt auf, welcher insbesondere derart dimensioniert ist, dass das Verschlussmittel vollständig in dem horizontalen Führungsschienenabschnitt aufnehmbar ist. Der oberseitig in dem Grundgestell angeordnete horizontale Führungsschienenabschnitt ermöglicht, das Verschlussmittel insbesondere dann, wenn die seitlichen Öffnungen vollständig freigegeben sein sollen, in eine Ruheposition zu verbringen, in der das Verschlussmittel derart angeordnet ist, dass es die Zugänglichkeit der Haltungseinrichtung nicht oder nur geringfügig einschränkt.

Das Verschlussmittel kann von dem im Wesentlichen vertikalen Führungsschienenabschnitt zu dem im Wesentlichen horizontalen Führungsabschnitt und umgekehrt verschoben werden.

Gemäß einer Ausführungsform weisen die Führungsschienen zwischen dem im Wesentlichen vertikalen Führungsschienenabschnitt und dem im Wesentlichen horizontalen Führungsschienenabschnitt einen gebogenen Führungsschienenabschnitt auf, welcher den vertikalen Führungsschienenabschnitt mit dem horizontalen Führungsschienenabschnitt verbindet. Auf diese Weise kann das Verschlussmittel vorteilhaft von dem horizontalen Führungsschienenabschnitt in den vertikalen Führungsschienenabschnitt überführt werden und umgekehrt. Durch das Vorsehen des gebogenen Führungsschienenabschnitts kann das Verschlussmittel leichter und mit höherem Bedienkomfort zwischen den Betriebspositionen überführt werden.

Gemäß einer Ausführungsform ist das Verschlussmittel als Gitter ausgebildet. Die Verwendung eines Gitters hat sich besonders bewährt, um einerseits die Geflügeltiere sicher in den jeweiligen Aufzuchtsebenen zu halten, und gleichzeitig eine Einsehbarkeit der Aufzuchtsebenen sicherzustellen, ebenso wie eine Belüftung derselben. Gemäß einer Ausführungsform ist das Gitter beschichtet, insbesondere mit Zink-Aluminium. Hierdurch wird der Korrosionsschutz verbessert und damit die Lebensdauer des Gitters erhöht.

Gemäß einer Ausführungsform ist das Gitter aus wenigstens zwei Gittersegmenten ausgebildet, wobei die wenigstens zwei Gittersegmente mittels eines Verbindungsmittels verbunden und insbesondere relativ zueinander beweglich, insbesondere verschwenkbar, sind. Das Gitter ist somit gewissermaßen nach Art einer Sektionaltür ausgebildet. Gemäß einer Ausführungsform sind die Verbindungsmittel dazu eingerichtet, die Gittersegmente reversibel zu verbinden, insbesondere mittels eines Rastmechanismus, und eine Verbindung zwischen den Gittersegmenten freizugeben. Durch die Bewegbarkeit bzw. Verschwenkbarkeit wird sichergestellt, dass das Gitter dem Verlauf der Führungsschienen folgen kann.

Auf diese Weise können die einzelnen Gittersegmente oder auch Gruppen von Gittersegmenten auf einfache Weise getrennt werden. Die Gittersegmente können hierdurch gewissermaßen Gitterabschnitte ausbilden, wobei beispielsweise ein erster Gitterabschnitt, gebildet aus mehreren Gittersegmenten, dazu verwendet werden kann, die seitliche Öffnung der unteren Aufzuchtsebene zu verschließen und ein zweiter Gitterabschnitt, der ebenfalls vorzugsweise aus mehreren Gittersegmenten besteht, beispielsweise in den horizontalen Führungsabschnitt überführt werden kann, sodass in dieser Konfiguration nicht benötigte Gitterabschnitte in dieser Position verstaut werden können. Hierdurch kann zu Beginn der Aufzuchtsphase erreicht werden, dass die jungen Geflügeltiere nicht aus der ersten Aufzuchtsebene entweichen können und trotzdem das Personal raschen Zugriff auf die Tiere durch die freigegebene seitliche Öffnung erlangen kann. Durch den Rastmechanismus können die Gittersegmenten von dem Personal auf einfache Weise zu einem Verbund zusammengeführt und voneinander separiert werden.

Gemäß einer Ausführungsform sind jedem Gittersegment wenigsten zwei seitlich gegenüberliegende Führungsmittel zugeordnet, mittels welchen das Gittersegment an den gegenüberliegenden Führungsschienen geführt ist. Die Führungsmittel weisen insbesondere Pins auf, welche die Führungsschienen beidseitig umfassen. Durch die Verwendung der Führungsmittel werden die Gittersegmente sicher an den Führungsschienen geführt. Darüber hinaus sind die Führungsmittel derart ausgebildet, dass diese auch entlang des gebogenen Führungsschienenabschnittes auf einfache Weise geführt werden können, sodass das Gitter insgesamt von dem vertikalen Führungsschienenabschnitt in den horizontalen Führungsschienenabschnitt und umgekehrt bewegt werden kann, sowie auch innerhalb der jeweiligen Führungsschienenabschnitte.

Gemäß einer Ausführungsform sind die Verbindungsmittel für zwei benachbarte Gittersegmente an dem Führungsmittel ausgebildet. Somit weist das Führungsmittel gewissermaßen zwei Funktionen auf: Zum einen dient es dazu, die Gittersegmente relativ zu den Führungsschienen zu führen und darüber hinaus auch dazu, eine reversible Verbindung zu einem benachbarten Gittersegment herzustellen. Durch diese Funktionsintegration kann die Gesamtanzahl der Teil reduziert werden.

Gemäß einer Ausführungsform ist den Führungsschienen ein Anschlag zugeordnet, welcher einen Bewegungsbereich des Gitters in dem vertikalen Führungsschienenabschnitt und/oder dem horizontalen Führungsschienenabschnitt begrenzt. Auf diese Weise kann sichergestellt werden, dass das Gitter nicht unbeabsichtigt den jeweiligen Führungsschienenabschnitt verlässt und sicher innerhalb des gewünschten Bewegungsbereiches gehalten wird.

Gemäß einer Ausführungsform weisen die Aufzuchtsebenen zu wenigstens einer zweiten Seite jeweils eine seitliche Öffnung auf, wobei die Haltungseinrichtung eine zweite Türanordnung mit einem Verschlussmittel aufweist, welches gegenüber den beiden Öffnungen vertikal verschiebbar aufgenommen und dazu eingerichtet ist, die erste, insbesondere untere, Öffnung, die zweite, insbesondere obere, Öffnung und beide Öffnungen freizugeben oder zu verschließen.

Gemäß einer Ausführungsform ist die zweite Seite gegenüberliegend zu der ersten Seite angeordnet. Die zweite Türanordnung macht sich dieselben Vorteile und bevorzugten Ausführungsformen zunutze wie die erste Türanordnung. Zur Vermeidung von Wiederholungen wird auf die obigen Ausführungen verwiesen.

Durch die Verwendung eines zweiten Verschlussmittels für die Öffnungen einer gegenüberliegenden Seite der Haltungseinrichtung wird diese von beiden Seiten zugänglich. Gemäß einer Ausführungsform sind die horizontalen Führungsabschnitte der ersten Türanordnung und der zweiten Türanordnung oberseitig an dem Grundgestell beabstandet zueinander und übereinander angeordnet. Auf diese Weise können sich die Verschlussmittel bzw. Gitter der beiden Türanordnungen in dem oberen Bereich der Haltungseinrichtung überlappen, wodurch eine besonders platzsparende Bauweise erzielt wird.

Gemäß einer Ausführungsform weist die Haltungseinrichtung in der ersten Aufzuchtsebene und der zweiten Aufzuchtsebene jeweils mehrere seitliche Öffnungen auf, wobei für jeweils benachbarte seitliche Öffnungen der ersten Aufzuchtsebene und der zweiten Aufzuchtsebene jeweils eine Türanordnung mit einem Verschlussmittel vorgesehen ist. Auf diese Weise können beispielsweise zwei oder mehr Türanordnungen nebeneinander angeordnet sein und darüber hinaus auch gegenüberliegend an einer Haltungseinrichtung.

Die Erfindung ist vorstehend unter Bezugnahme auf eine Halterungseinrichtung beschrieben worden. In einem weiteren Aspekt betrifft die Erfindung ein Verfahren zur Konfiguration einer Halterungseinrichtung nach wenigstens einem der vorstehenden Ausführungsbeispiele. Die Erfindung löst die eingangs bezeichnete Aufgabe in Bezug auf das Verfahren mit den Schritten: Positionieren des Gitters derart, dass die seitlichen Öffnungen geöffnet sind, und/oder Positionieren des Gitters derart, dass die seitliche Öffnung der ersten Aufzuchtsebene geschlossen ist, und die seitliche Öffnung der zweiten Aufzuchtsebene geöffnet ist, und/oder Positionieren des Gitters derart, dass beide seitliche Öffnungen der ersten Aufzuchtsebene und der zweiten Aufzuchtsebene geschlossen sind, und/oder Teilen des Gitters in Gitterabschnitte und bewegende Gitterabschnitte des Gitters derart, dass die seitliche Öffnung der zweiten Aufzuchtsebene geschlossenen ist und die seitliche Öffnung der ersten Aufzuchtsebene geöffnet ist.

Das Verfahren macht sich die gleichen Vorteile und bevorzugten Ausführungsformen zunutze wie die erfindungsgemäße Haltungseinrichtung und umgekehrt.

Diesbezüglich wird auf die obigen Ausführungen verwiesen und deren Inhalt hier mit einbezogen. Zusammengefasst wird eine besonders flexible Konfigurierbarkeit der Haltungseinrichtung je nach Wachstumsstadium der Geflügeltiere bzw. in Abhängigkeit von vorzunehmenden Arbeiten, wie beispielsweise Einfangen oder Impfen, ermöglicht.

In einem weiteren Aspekt betrifft die Erfindung einen Geflügeltierstall für die Aufzucht von Geflügeltieren, insbesondere einen Junghennenstall. Die Erfindung löst die eingangs bezeichnete Aufgabe in Bezug auf den Geflügeltierstall, indem dieser eine Aufzucht-Haltungseinrichtung nach mindestens einem der vorstehenden Ausführungsbeispiele umfasst. Auch der Geflügeltierstall macht sich die gleichen Vorteile und bevorzugten Ausführungsformen zunutze wie die erfindungsgemäße Haltungseinrichtung und das erfindungsgemäße Verfahren sowie umgekehrt. Diesbezüglich wird auf die obigen Ausführungen verwiesen und deren Inhalt hier mit einbezogen.

In einem weiteren Aspekt betrifft die Erfindung die Verwendung einer Aufzucht-Haltungseinrichtung nach mindestens einem der vorstehenden Ausführungsbeispielen zur Aufzucht von Geflügeltieren, insbesondere Junghennen, in einem Geflügeltierstall, vorzugsweise in einem Geflügeltierstall nach einem der vorstehenden Ansprüche. Auch die Verwendung macht sich die gleichen Vorteile und bevorzugten Ausführungsform zunutze wie die erfindungsgemäße Haltungseinrichtung, das erfindungsgemäße Verfahren, der erfindungsgemäße Geflügeltierstall und umgekehrt. Diesbezüglich wird auf die obigen Ausführungen verwiesen und deren Inhalt hier mit einbezogen.

Die Erfindung wird nachfolgend anhand eines bevorzugten Ausführungsbeispiels unter Bezugnahme auf die beigefügten Figuren näher beschrieben.

Hierbei zeigen:
- Fig. 1:: einen erfindungsgemäßen Geflügeltierstall mit einer Aufzucht-Haltungseinrichtung, wobei die Verschlussmittel die seitlichen Öffnungen freigegeben;
- Fig. 2:: eine Detailansicht eines horizontalen Führungsschienenabschnitts aus Fig. 1;
- Fig. 3:: das Ausführungsbeispiel der erfindungsgemäßen Aufzucht-Haltungseinrichtung gemäß Fig. 1, wobei die Verschlussmittel die seitlichen Öffnungen verschließen;
- Fig. 4 und Fig. 5:: Detailansichten des Betriebszustandes gemäß Fig. 3;
- Fig. 6:: das Ausführungsbeispiel der erfindungsgemäßen Aufzucht-Haltungseinrichtung gemäß Fig. 1, wobei die Verschlussmittel die zweite, obere Öffnung verschließen; und
- Fig. 7:: das Ausführungsbeispiel der erfindungsgemäßen Aufzucht-Haltungseinrichtung gemäß Fig. 1, wobei die Verschlussmittel geteilt sind und dabei die erste, untere Öffnung verschließen und die zweite, obere Öffnung freigeben.

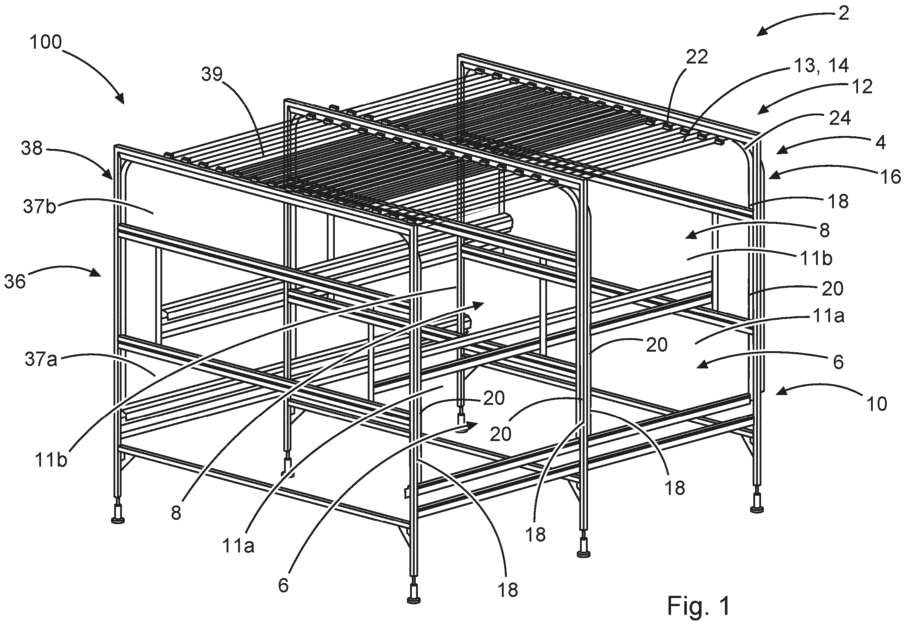

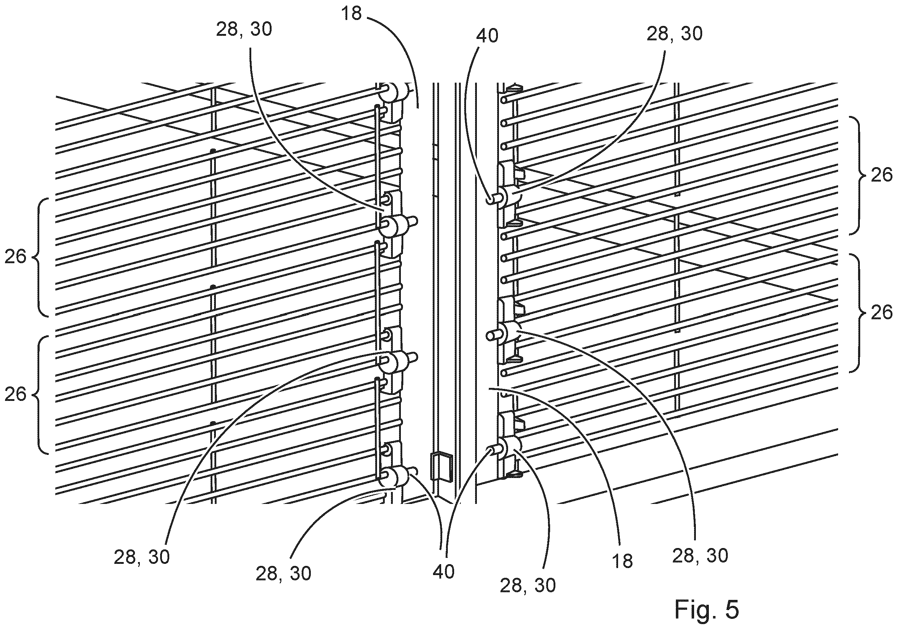

Die Figuren 1 - 7 zeigen einen Geflügeltierstall 100 für die Aufzucht von Geflügeltieren, welcher in Fig. 1 schematisch dargestellt ist. Bei dem Geflügeltierstall 100 handelt es sich um einen Junghennenstall. Der Geflügeltierstall 100 umfasst unter Bezugnahme auf Fig. 1 eine Aufzucht-Haltungseinrichtung 2. Die Aufzucht-Haltungseinrichtung 2 dient der gestuften Aufzucht von Geflügeltieren und ist insbesondere als Aufzucht-Voliere 2 ausgebildet. Die Aufzucht-Haltungseinrichtung 2 weist ein Grundgestell 4 auf. An dem Grundgestell 4 ist eine erste Aufzuchtsebene 6 und eine zweite Aufzuchtsebene 8 ausgebildet bzw. aufgenommen. Die zweite Aufzuchtsebene 8 ist oberhalb der ersten Aufzuchtsebene 6 angeordnet. Die Aufzuchtsebenen 6, 8 sind zur Haltung der Geflügeltiere eingerichtet. Die Aufzuchtsebenen 6, 8 sind zu wenigstens einer Seite 10 der Aufzucht-Haltungseinrichtung über jeweils eine seitliche Öffnung 11a, 11b, geöffnet ausgebildet. In dem in Fig. 1 gezeigten Ausführungsbeispiel weist jede Aufzuchtsebene 6, 8 benachbart zueinander angeordnete Öffnungen 11a der ersten Aufzuchtsebene 6 und 11b der zweiten Aufzuchtsebene 8, auf.

Darüber hinaus weist die Aufzucht-Haltungseinrichtung 2 eine Türanordnung 12 mit einem Verschlussmittel 13 auf, wobei das Verschlussmittel 13 gegenüber den beiden Öffnungen 11a, 11b vertikal verschiebbar aufgenommen und dazu eingerichtet ist, die erste, untere Öffnung 11a, die zweite, obere Öffnung 11b oder auch beide Öffnungen 11a, 11b gleichzeitig freizugeben oder zu verschließen. In dem in der Fig. 1 gezeigten Betriebszustand werden beide Öffnungen 11a, 11b durch das Verschlussmittel 13 freigegeben.

Die Türanordnung 12 weist ferner eine Führungsanordnung 16 zur Führung des Verschlussmittels 13 auf. Die Führungsanordnung 16 ist an dem Grundgestell 4 der Haltungseinrichtung 2 angeordnet. In Fig. 1 und in den weiteren Figuren wird die Türanordnung jeweils für die rechts in der Figur dargestellten seitlichen Öffnungen 11a, 11b detailliert.

Die Führungsanordnung 16 weist gegenüberliegend angeordnete Führungsschienen 18 auf. An den Führungsschienen 18 ist das Verschlussmittel 13 verschiebbar geführt. Die Führungsschienen 18 weisen benachbart zu den seitlichen Öffnungen 11a, 11b einen im Wesentlichen vertikalen Führungsschienenabschnitt 20 auf. Der im Wesentlichen vertikale Führungsschienenabschnitt 20 ist dazu eingerichtet, das Verschlussmittel 13 zum Verschließen und Freigeben der seitlichen Öffnungen 11a, 11b zu führen. Die Führungsschienen 18 weisen ferner oberseitig an dem Grundgestell 4 einen im Wesentlichen horizontalen Führungsschienenabschnitt 22 auf. Der im Wesentlichen horizontalen Führungsschienenabschnitt 22 ist derart dimensioniert und dazu eingerichtet, das Verschlussmittel 13 vollständig in dem horizontalen Führungsschienenabschnitt 22 aufzunehmen. Dieser Zustand ist in Fig. 1 dargestellt. Hier ist zu erkennen, dass der obere horizontale Führungsschienenabschnitt 22 das Verschlussmittel 13 vollständig aufnehmen kann, sodass das Verschlussmittel horizontal und oberhalb der zweiten Aufzuchtsebene 8 aufgenommen ist.

Die Führungsschienen 18 weisen ferner zwischen dem im Wesentlichen vertikalen Führungsschienenabschnitt 20 und dem in Wesentlichen horizontalen Führungsschienenabschnitt 22 einen gebogenen Führungsschienenabschnitt 24 auf. Der gebogene Führungsschienenabschnitt 24 verbindet den vertikalen Führungsschienenabschnitt 20 mit den horizontalen Führungsschienenabschnitt 22. Durch den gebogenen Führungsschienenabschnitt 24, der an beiden gegenüberliegenden Führungsschienen 18 ausgebildet ist, kann das Verschlussmittel 13 auf besonders angenehme Weise zwischen dem horizontalen Führungsschienenabschnitt 22 und dem vertikalen Führungsschienenabschnitt 20 hin und her bewegt werden.

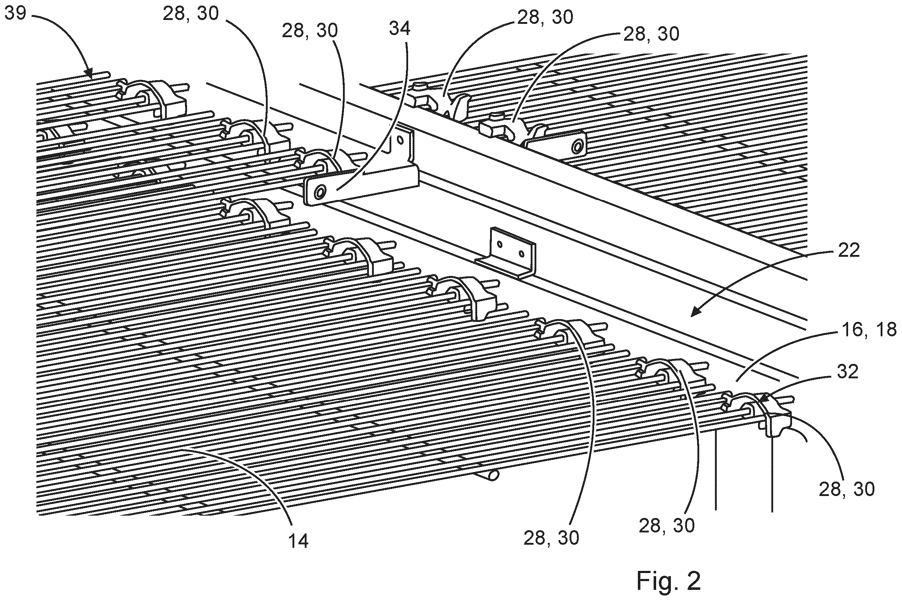

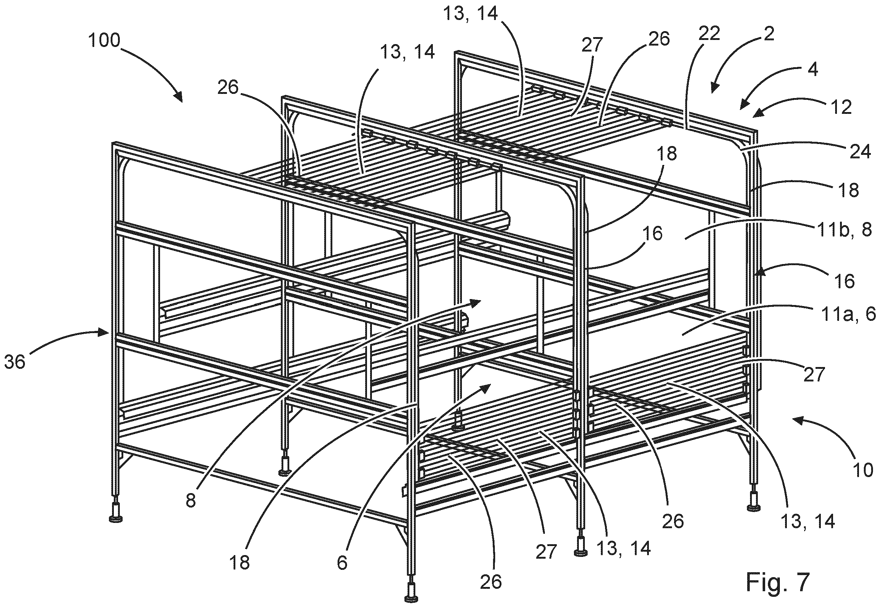

In dem in den Figuren gezeigten Ausführungsbeispiel ist das Verschlussmittel 13 als Gitter 14 ausgebildet. Das Gitter 14 besteht aus mehreren Gittersegmenten 26, wobei jeweils zwei Gittersegmente 26 mittels jeweils eines Verbindungsmittels 28 verbunden sind, wie in den Figuren 2 und 4 sowie 5 anschaulich erkennbar ist. Die Verbindungsmittel 28 sind dazu eingerichtet, die Gittersegmente 26 reversibel miteinander zu verbinden, insbesondere mittels eines Rastmechanismus 32 und eine Verbindung zwischen den Gittersegmenten 26 reversibel freizugeben. Auf diese Weise können die Gittersegmente 26 zu einem Gitter 14 zusammengefügt werden und darüber hinaus auch zu einzelnen Gitterabschnitten 27, wie in Fig. 7 gezeigt ist.

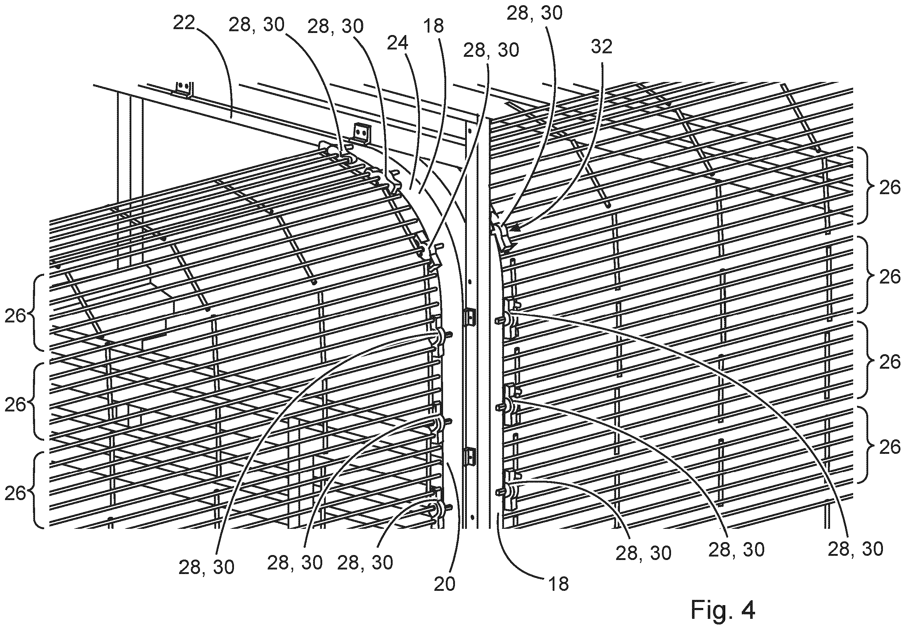

Durch das Vorsehen von Rastmechanismen 32 können die Gittersegmente 26 wie vom Bediener gewünscht, konfektioniert werden. Jedem Gittersegment 26 sind zwei seitlich gegenüberliegende Führungsmittel 30 zugeordnet. Mittels der Führungsmittel 30 ist das jeweilige Gittersegment 26 in den gegenüberliegenden Führungsschienen 18 geführt. Die Führungsmittel 30 weisen insbesondere zwei gegenüberliegende Führungspins 40 auf, die in Kontakt mit gegenüberliegenden Seiten der Führungsschienen 18 stehen, sodass die Führungsmittel 30 sicher an den Führungsschienen 18 geführt sind. In dem in den Figuren gezeigten Ausführungsbeispiel sind die Verbindungsmittel 28 für zwei benachbarte Gittersegmente 26 an dem Führungsmittel 30 ausgebildet. Damit erfüllen die Führungsmittel 30 gewissermaßen zwei Funktionen. Zum einen dienen sie der Führung gegenüber den Führungsschienen 18 und zum anderen dazu, benachbarte Gittersegmente 26 reversibel miteinander zu verbinden. Die benachbarten Gittersegmente 26 sind darüber hinaus relativ schwenkbar bzw. drehbar innerhalb den Verbindungsmittel 28 geführt, sodass das Gitter 14 insgesamt den gebogenen Führungsschienenabschnitt 24 passieren kann, wie in Fig. 4 gezeigt ist, ohne dass der Verbund der Gittersegmente 26 hierdurch aufgelöst wird.

Wie in Fig. 2 gezeigt ist den Führungsschienen 18 ein Anschlag 34 zugeordnet. Der Anschlag 34 begrenzt einen Bewegungsbereich des Gitters 14 in den vertikalen Führungsschienenabschnitt 20 und/oder dem horizontalen Führungsschienenabschnitt 22. Auf diese Weise wird sichergestellt, dass das Gitter 14 sicher in Kontakt bleibt mit den Führungsschienen 18 und in dem vorgesehenen Bewegungsbereich verbleibt. Wie insbesondere in Fig. 1 zu erkennen ist, weisen die Aufzuchtsebenen 6, 8 an einer der ersten Seite 10 gegenüberliegenden zweiten Seite 36 jeweils wenigstens eine, insbesondere zwei seitliche Öffnung 37a, 37b, auf. Die Haltungseinrichtung 2 weist wenigstens eine, insbesondere zwei zweite Türanordnungen 38 mit einem Verschlussmittel 39 auf, wobei das Verschlussmittel 39 gegenüber den beiden Öffnungen 37a, 37b vertikal verschiebbar aufgenommen und dazu eingerichtet ist, die erste, untere Öffnung 37a, die zweite, obere Öffnung 37b und beide Öffnungen 37a, 37b freizugeben oder zu verschließen. In dem in den Figuren gezeigten Ausführungsbeispiel sind je Seite 10, 36 jeweils zwei seitliche Öffnungen 11a in der ersten Aufzuchtsebene 6 und zwei seitliche Öffnungen 11b in der zweiten Aufzuchtsebene 8 vorgesehen. Den jeweils benachbarten seitlichen Öffnungen 11a, 11b ist dabei eine Türanordnung 12 zugeordnet. Auf der zweiten Seite 36 gilt dies analog. Auch hier ist den benachbarten seitlichen Öffnungen 37a, 37b jeweils eine zweite Türanordnung zugeordnet. Die horizontalen Führungsschienenabschnitte 22 der Türanordnung 12 und der zweiten Türanordnung 38 verlaufen insbesondere parallel zueinander und übereinander, wie in Fig. 1 anschaulich dargestellt ist. Auf diese Weise können auch die Gitter 14 bzw. Verschlussmittel 13 parallel zueinander in einem Bereich oberhalb der zweiten Aufzuchtsebene 8 in eine Ruheposition, wie in Fig. 1 dargestellt, verbracht werden.

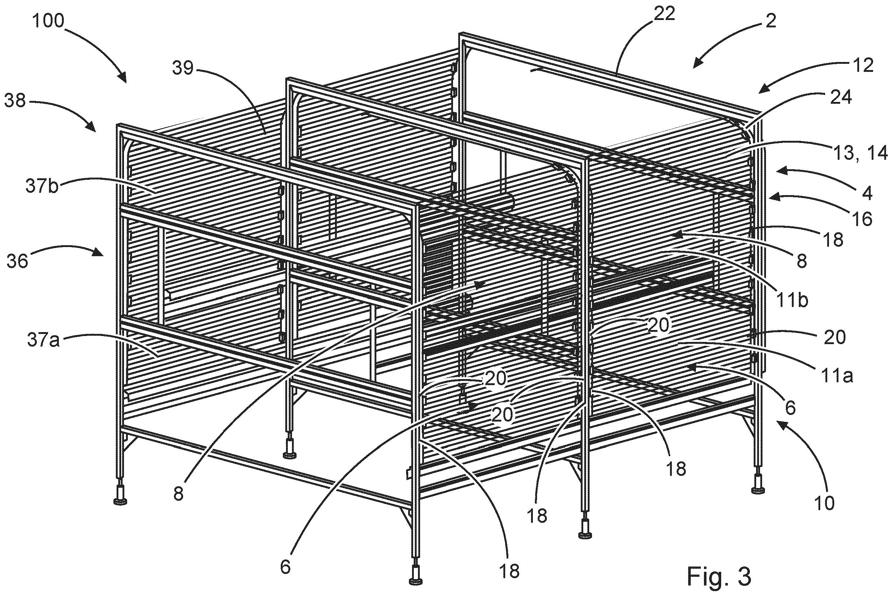

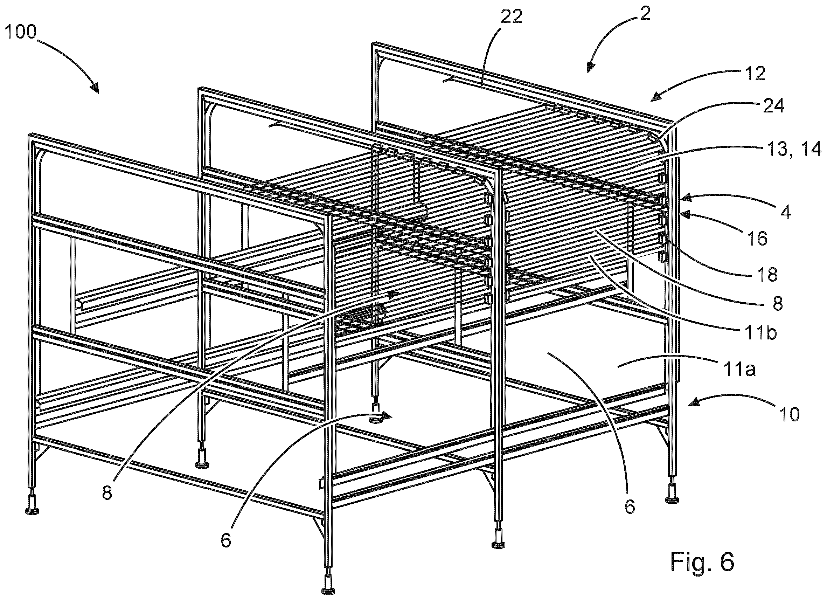

In dem in Fig. 1 gezeigten Betriebszustand, bei dem die Gitter 14 vollständig geöffnet sind und in einem oberen, horizontalen Bereich der horizontalen Führungsschienenabschnitte 22 angeordnet sind, kann Impfpersonal die Tiere, die in der Aufzucht-Haltungseinrichtung 2 aufgenommen sind, besonders gut fangen und impfen. Darüber hinaus werden durch die Türanordnung 12 kaum Barrieren für das Personal errichtet. In dem in der Fig. 3 gezeigten geschlossenen Zustand der Türanordnungen 12 wird verhindert, dass die Tiere auf einen Boden unterhalb der Aufzucht-Haltungseinrichtung 2 gelangen. In dem in der Fig. 6 gezeigten Zustand, bei dem sich das Gitter 14 bzw. das Verschlussmittel 13 teilweise sowohl in dem vertikalen Führungsschienenabschnitt 20, dem horizontalen Führungsschienenabschnitt 22 und dem gebogenen Führungsschienenabschnitt 24 befindet, wird die erste Aufzuchtsebene 6 freigegeben und die obere Aufzuchtsebene geschlossen.

Hierdurch wird verhindert, dass Tiere, die sich im Bereich der oberen zweiten Aufzuchtsebene 8 befinden, auf einen Boden unterhalb der Aufzucht-Haltungseinrichtung 2 herunterspringen können und darüber hinaus kann sichergestellt werden, dass zunächst die Tiere in der von außen zugänglichen ersten Aufzuchtsebene 6 gefangen werden können, bevor beispielsweise auch die Tiere in der zweiten Aufzuchtsebene 8 gefangen werden können. In dem in der Fig. 7 gezeigten Betriebszustand wurde das Gitter 14 in Gitterabschnitte 27 geteilt, die ihrerseits jeweils aus mehreren Gittersegmenten 26 bestehen. Auf diese Weise wird die untere erste Aufzuchtsebene 6 geschlossen und die zweite Aufzuchtsebene 8 freigegeben. Der nicht benötigte Gitterabschnitt 27 kann darüber hinaus in dem Bereich des horizontalen Führungsschienenabschnitts 22 verbracht werden und wirkt sich insoweit nicht störend auf die Zugänglichkeit der Aufzucht-Haltungseinrichtung 2 aus.

### Bezugszeichenliste

- 2: Aufzucht-Haltungseinrichtung / Aufzucht-Voliere
- 4: Grundgestell
- 6: ersten Aufzuchtsebene
- 8: zweite Aufzuchtsebene
- 10: erste Seite
- 11a,b: seitliche Öffnungen der ersten Seite (erste, untere Öffnung 11a / zweite, obere Öffnung 11b)
- 12: Türanordnung
- 13: Verschlussmittel
- 14: Gitter
- 16: Gitter-Führungsanordnung
- 18: Führungsschiene
- 20: vertikaler Führungsschienenabschnitt
- 22: horizontaler Führungsschienenabschnitt
- 24: gebogener Führungsschienenabschnitt
- 26: Gittersegment
- 27: Gitterabschnitt
- 28: Gittersegment-Verbindungsmittel
- 30: Gittersegment-Führungsmittel
- 32: Rastmechanismus
- 34: oberer Führungsschienen-Anschlag
- 36: zweite Seite
- 37a,b: seitliche Öffnung der zweiten Seite
- 38: zweite Türanordnung
- 39: zweites Verschlussmittel
- 40: Führungspin
- 100: Geflügeltierstall

## Patentansprüche

1. Aufzucht-Haltungseinrichtung (2) zur gestuften Aufzucht von Geflügeltieren, insbesondere Aufzucht-Voliere (2), mit
- wenigstens einer ersten Aufzuchtsebene (6) und einer zweiten Aufzuchtsebene (8), welche oberhalb der ersten Aufzuchtsebene (6) angeordnet ist, wobei die Aufzuchtsebenen (6, 8) zur Haltung der Geflügeltiere eingerichtet sind, und wobei die erste Aufzuchtsebene (6) zu wenigstens einer Seite (10) der Aufzucht-Haltungseinrichtung (2) eine erste seitliche Öffnung (11a) aufweist und die zweite Aufzuchtsebene (8) zu der Seite (10) eine zweite seitliche Öffnung (11b) aufweist, und
- einer Türanordnung (12) zum Verschließen der Öffnungen (11a, 11b), **dadurch gekennzeichnet, dass** die Türanordnung (12) ein Verschlussmittel (13) aufweist, welches gegenüber den beiden Öffnungen (11a, 11b) vertikal verschiebbar angeordnet und dazu eingerichtet ist, die erste Öffnung (11a), die zweite Öffnung (11b) und beide Öffnungen (11a, 11b) freizugeben oder zu verschließen.

2. Haltungseinrichtung (2) nach Anspruch 1,
wobei die Türanordnung (12) eine Führungsanordnung (16) zur Führung des Verschlussmittels (13) aufweist, wobei die Führungsanordnung (16) an einem Grundgestell (4) der Haltungseinrichtung (2) angeordnet ist.

3. Haltungseinrichtung (2) nach Anspruch 2,
wobei die Führungsanordnung (16) gegenüberliegend angeordnete Führungsschienen (18) aufweist, an welchen das Verschlussmittel (13) verschiebbar geführt ist, und wobei die Führungsschienen (18) benachbart zu den seitlichen Öffnungen (11a, 11b) einen im Wesentlichen vertikalen Führungsschienenabschnitt (20) aufweisen, welcher dazu eingerichtet ist, das Verschlussmittel (13) zum Verschließen und Freigeben der seitlichen Öffnungen (11a, 11b) zu führen.

4. Haltungseinrichtung (2) nach Anspruch 3,
wobei die Führungsschienen (18) oberseitig an dem Grundgestell einen im Wesentlichen horizontalen Führungsschienenabschnitt (22) aufweisen, welcher insbesondere derart dimensioniert ist, dass das Verschlussmittel (13) vollständig in dem horizontalen Führungsschienenabschnitt (22) aufnehmbar ist.

5. Haltungseinrichtung (2) nach Anspruch 4,
wobei die Führungsschienen (18) zwischen dem im Wesentlichen vertikalen Führungsschienenabschnitt (20) und dem im Wesentlichen horizontalen Führungsschienenabschnitt (22) einen gebogenen Führungsschienenabschnitt (24) aufweist, welcher den vertikalen Führungsschienenabschnitt (20) mit dem horizontalen Führungsschienenabschnitt (22) verbindet.

6. Haltungseinrichtung (2) nach wenigstens einem der vorstehenden Ansprüche, wobei das Verschlussmittel (13) als Gitter (14) ausgebildet ist.

7. Haltungseinrichtung (2) nach wenigstens einem der vorstehenden Ansprüche, wobei das Gitter (14) aus wenigstens zwei Gittersegmenten (26) ausgebildet ist, und wobei die wenigstens zwei Gittersegmente (26) mittels eines Verbindungsmittels (28) verbunden und relativ zueinander beweglich, insbesondere verschwenkbar, sind.

8. Haltungseinrichtung (2) nach Anspruch 7,
wobei das Verbindungsmittel (28) dazu eingerichtet ist, die Gittersegmente (26) reversibel zu verbinden, insbesondere mittels eines Rastmechanismus (32), und eine Verbindung zwischen den Gittersegmenten (26) freizugeben.

9. Haltungseinrichtung (2) nach wenigstens einem der vorstehenden Ansprüche, wobei jedem Gittersegment (26) wenigstes zwei seitlich gegenüberliegende Führungsmittel (30) zugeordnet sind, mittels welchen das Gittersegment (26) an den gegenüberliegenden Führungsschienen (18) geführt ist.

10. Haltungseinrichtung (2) nach Anspruch 9,
wobei die Verbindungsmittel (28) für zwei benachbarte Gittersegmente (26) an dem Führungsmittel (30) ausgebildet sind.

11. Haltungseinrichtung (2) nach wenigstens einem der vorstehenden Ansprüche, wobei den Führungsschienen (18) ein Anschlag (34) zugeordnet ist, welcher einen Bewegungsbereich des Gitters (14) in dem vertikalen Führungsschienenabschnitt (20) und/oder dem horizontalen Führungsschienenabschnitt (22) begrenzt.

12. Haltungseinrichtung (2) nach wenigstens einem der vorstehenden Ansprüche, wobei die Aufzuchtsebenen (6, 8) zu wenigstens einer zweiten Seite (36) jeweils eine seitliche Öffnung (37a, 37b) aufweisen, wobei die Haltungseinrichtung (2) eine zweite Türanordnung (38) mit einem Verschlussmittel (39), welches gegenüber den beiden Öffnungen (37a, 37b) vertikal verschiebbar aufgenommen und dazu eingerichtet ist, die erste Öffnung (37a), die zweite Öffnung (37b) und beide Öffnungen freizugeben oder zu verschließen.

13. Verfahren zur Konfiguration einer Haltungseinrichtung (2) nach wenigstens einem der vorstehenden Ansprüche, mit wenigstens einem der Schritte:
- Positionieren des Gitters (14) derart, dass die seitlichen Öffnungen (11a, 11b) geöffnet sind, und/oder
- Positionieren des Gitters (14) derart, dass die seitliche Öffnung (11a) der ersten Aufzuchtsebene (6) geschlossen ist, und die seitliche Öffnung (11b) der zweiten Aufzuchtsebene (8) geöffnet ist, und/oder
- Positionieren des Gitters (14) derart, dass beide seitliche Öffnungen (11a, 11b) der ersten Aufzuchtsebene (6) und der zweiten Aufzuchtsebene (8) geschlossen sind, und/oder
- Teilen des Gitters (14) in Gitterabschnitte (27) und Bewegen der Gitterabschnitte (26) des Gitters (14) derart, dass die seitliche Öffnung (11b) der zweiten Aufzuchtsebene (8) geschlossen ist und die seitliche Öffnung (11a) der ersten Aufzuchtsebene (6) geöffnet ist.

14. Geflügeltierstall (100) für die Aufzucht von Geflügeltieren, insbesondere Junghennenstall, umfassend eine Aufzucht-Haltungseinrichtung (2) nach mindestens einem der vorstehenden Ansprüche 1 bis 12.

15. Verwendung einer Aufzucht-Haltungseinrichtung (2) nach mindestens einem der vorhergehenden Ansprüche 1 bis 12 zur Aufzucht von Geflügeltieren, insbesondere Junghennen, in einem Geflügeltierstall, vorzugsweise in einem Geflügeltierstall (100) nach Anspruch 14.
